# EUROPÄISCHE PATENTSCHRIFT

(11) **EP 3 657 085 B1**
(45) Veröffentlichungstag und Bekanntmachung des Hinweises auf die Patenterteilung: **15.06.2022**
(21) Anmeldenummer: 19210000.6
(22) Anmeldetag: 19.11.2019
(51) Int. Cl.: F24F 6/04, F24F 6/14, F24F 5/00, F24F 11/00, F24F 6/00, F24F 110/10

(54) **VERFAHREN ZUR RAUMKLIMATISIERUNG**
ROOM AIR-CONDITIONING METHOD
PROCÉDÉ DE CLIMATISATION DE LOCAUX

(30) Priorität: 23.11.2018 DE 102018129584
(43) Veröffentlichungstag der Anmeldung: 27.05.2020
(73) Patentinhaber: pervormance international GmbH, 89075 Ulm (DE)
(72) Erfinder:
(74) Vertreter: Frick, Robert

(56) Entgegenhaltungen:
- EP-A1- 3 658 396
- WO-A1-2011/015377
- DE-A1-102015 003 660
- DE-U1-202010 013 913
- JP-A- H07 178 312
- US-A- 5 695 117
- US-A1- 2015 292 797

## Beschreibung

Die Erfindung betrifft ein Verfahren zur Raumklimatisierung unter Verwendung eines Textils, das einen Vliesstoff umfasst, der mit einem superabsorbierenden Polymer beladen ist.

Aufgrund des Klimawandels steigt die Zahl der heißen Tage an. Die Hitze kann nicht nur zu einer Reihe an gesundheitlichen Problemen führen, sondern führt auch zu einer Verringerung der Leistungsfähigkeit und Konzentration. So sinkt die Produktivität, wenn beispielsweise in Bürogebäuden im Sommer zu hohe Temperaturen herrschen. Auch die Funktion diverser Maschinen kann bei zu hoher Umgebungstemperatur beeinträchtigt sein.

In Anbetracht der oben genannten Problematik wird eine zunehmende Zahl an Klimaanlagen in Gebäuden installiert. Diese sind allerdings energieintensiv und haben, abhängig vom Energiemix, eine sehr schlechte CO₂-Bilanz. Somit wird durch den umfangreichen Einsatz von Klimaanlagen der Klimawandel noch mehr befördert. Daneben sind die Anschaffungskosten und insbesondere laufenden Strom- und Wartungskosten für Klimaanlagen sehr groß, gerade in großen Räumen oder alten, unzureichend gedämmten Gebäuden, wobei ältere Gebäude oftmals aus baulichen oder rechtlichen Gründen gar nicht mit Klimaanlagen ausgerüstet werden können. Daneben kommt es in Lüftungs- und Klimaanlagen vielfach zur Keimbildung und die Geräuschentwicklung von Klimakompressoren kann als störend empfunden werden.

Entsprechend sind alternative Lösungsansätze zur Raumklimatisierung gefragt.

In der EP 2 477 588 B1 werden Vliesstoffe zum Einsatz in der Textilindustrie offenbart, in denen Partikel aus einem superabsorbierenden Polymer aufgenommen sind. Die Vliesstoffe können daher signifikante Wassermengen aufnehmen und durch fortlaufendes Verdunsten des Wassers eine Kühlwirkung erzielen. In der US 2015/292797 A1 wird ein System mit Vliesstoffen mit superabsorbierendem Polymer zur Klimatisierung der Luft für Räume eines Gebäudes offenbart.

Aufgabe der Erfindung ist die Bereitstellung einer energieeffizienten und leisen Lösung zur Kühlung von Räumen, welche Klimaanlagen unterstützen oder sogar ersetzen kann.

Vor diesem Hintergrund betrifft die Erfindung ein Verfahren nach Anspruch 1.

Der Vliesstoff bzw. genauer gesagt das superabsorbierende Polymer wird durch die Befeuchtung mit einer verdunstenden Flüssigkeit, vorzugsweise mit Wasser beladen, welche dann nach und nach wieder aus dem Vliesstoff bzw. Polymer verdunstet, sodass eine Kühlwirkung erreicht wird. Bei Wasser kann die Kühlleistung bis zu etwa 660 W·h/l betragen. Aufgrund dieser Kühlwirkung kann das Textil eine im Gebäude befindliche Klimaanlage unterstützen oder sogar ersetzen. Die Lösung ist geräuschlos und sorgt zudem für eine ausreichend hohe Luftfeuchtigkeit im Raum, während Klimaanlagen oft dazu tendieren, die Luft zu sehr auszutrocknen. Daneben hat das Textil auch eine regelmäßig erwünschte schallabsorbierende Wirkung und verringert den Raumhall.

Der Vliesstoff kann beispielsweise aus Kunstfasern wie Polyester gefertigt werden. Auch andere Kunst- oder Naturfasern sind aber denkbar. Das superabsorbierende Polymer kann in Form von Partikeln vorliegen, die im Vliesstoff verteilt sind. Bevorzugt ist aber, dass die Vliesfasern direkt mit einem superabsorbierenden Polymer beschichtet sind. Dadurch wird eine Klumpenbildung vermieden und es kann eine gleichmäßige Verteilung der Feuchtigkeit über den gesamten Vliesstoff erreicht werden. Chemisch gesehen handelt es sich bei dem superabsorbierenden Polymer um ein quervernetztes Polymer mit polaren Eigenschaften. Beispiele umfassen quervernetzte Varianten von Polyacrylamid, Co-Acrylsäure-Acrylamid oder Polyvinylpyrrolidon. Diese Polymere können große Mengen an Wasser, teilweise mehr als das 1000fache ihres Eigengewichts an Wasser in ihrem Inneren binden. Sie quellen dabei auf. Das superabsorbierende Polymer bindet das Wasser dabei fest und gibt kein flüssiges Wasser ab. Es kann lediglich unter Aufwand von Wärmeenergie wieder aus dem Polymer verdampft werden.

Die erfindungsgemäße Verwendung flächenförmiger Textile, die einen Vliesstoff umfassen, der mit einem superabsorbierenden Polymer beladen ist, hat gegenüber beispielsweise der Verwendung von einfachen Textilien unter anderem auch den maßgeblichen Vorteil, dass das Wasser dann, wenn das Textil in einer vertikalen oder schrägen Ebene angeordnet wird, nicht durch die Schwerkraft an das untere Ende des Textils gezogen wird, was zu einer ungleichen Verteilung über die Fläche und auch zu einem Tropfen führen würde, sondern dass das Wasser von der Schwerkraft unbeeindruckt gleichmäßig über das Textil verteilt bleibt.

Bevorzugte Ausgestaltungen des Textils können der Beschreibung des Patents EP 2 477 588 B1 entnommen werden.

Der Vliesstoff kann einseitig oder beidseitig mit einer Gewebeschicht überzogen sein, um diesen vor mechanischer Einwirkung zu schützen und optisch zu kaschieren.

In einer Ausführungsform ist vorgesehen, dass an der Oberfläche des Textils einseitig oder beidseitig ein Abstandsgewirk angeordnet ist. Durch die Anordnung eines Abstandsgewirks kann die Luftzufuhr zu dem Textil verbessert werden, unter anderem auch wenn dieses einseitig an einer Gebäudewand oder einem anderen Strukturelement zugewandt ist. Ferner kann das Abstandsgewirk eine optisch ansprechende Kaschierung darstellen.

Die Befeuchtung des Textils erfolgt anhand einer Befeuchtungsvorrichtung, die ausgebildet ist, Flüssigkeit an das Textil abzugeben. Die Befeuchtungsvorrichtung kann beispielsweise eine oder mehrere Sprühdüsen, gegebenenfalls mit Zerstäuber aufweisen, um Flüssigkeit und vorzugsweise Wasser auf dem Textil zu verteilen. In einer alternativen Ausgestaltung kann die Befeuchtungsvorrichtung eine Leitung wie beispielsweise einen Schlauch mit mehreren Austrittsöffnungen umfassen. Die Düsen bzw. Austrittsöffnungen können über die gesamte Oberfläche des Textils verteilt angeordnet sein. Die Befeuchtungsvorrichtung kann mit einem Flüssigkeits- und vorzugsweise Wasserreservoir in Verbindung stehen, beispielsweise einem Tank, der von einem Benutzer mit Flüssigkeit und vorzugsweise Wasser befüllt werden kann, oder mit einer Flüssigkeits- und vorzugsweise Wasserleitung des Gebäudes.

Die Befeuchtungsvorrichtung kann eine Pumpe zur Förderung der Flüssigkeit und/oder Steuerklappen aufweisen und mit einer Stromquelle zur Betätigung dieser Elemente in Verbindung stehen kann. Bei der Stromquelle kann es sich einerseits um eine Stromleitung des Gebäudes handeln, andererseits aber auch um ein separates Element wie beispielsweise ein mit der Anordnung umfassend das Textil und die Befeuchtungsvorrlichtung asoziiertes Photovoltaikelement. So würde das erfindungsgemäße Verfahren energieneutral durchgeführt werden.

Die Befeuchtungsvorrichtung steht mit einer Steuereinheit in Verbindung, um das Textil in Abhängigkeit der Temperatur und einer bestimmten Routine oder Steuervorgabe mit Flüssigkeit zu beladen.

In einer Ausführungsform ist vorgesehen, dass im Rahmen des Verfahrens Luft aktiv über das Textil geleitet wird. Vorzugsweise wird Luft an der Oberfläche des Textils entlang geleitet, sodass Dampf aus dem Textil mitgenommen und die Verdunstung weiterer Flüssigkeit begünstigt wird.

Als Mittel zur Luftbewegung kann beispielsweise ein Ventilator vorgesehen sein. Ferner können ein oder mehrere auf das Textil gerichtete Luftdüsen vorgesehen sein, die mit einem Gebläse in Verbindung stehen. Die Luftdüsen können verschließbar und verstellbar sein. Es ist die Anordnung mehrerer Düsen denkbar, die über die Fläche des Textils verteilt angeordnet sind. Die Mittel zur Luftbewegung können wie die Befeuchtungsvorrichtung mit einer Stromquelle in Verbindung stehen, bei der es sich einerseits um eine Stromleitung des Gebäudes, andererseits aber auch um ein separates Element handeln kann, beispielsweise ein mit dem Luftbewegungsmittel asoziiertes Photovoltaikelement.

In einer alternativen Ausgestaltung wird das Textil nicht aktiv belüftet, sondern lediglich durch natürliche Luftkonvektion.

In einer Ausführungsform ist vorgesehen, dass die Beladung des Textils mit Wasser gemessen wird und die Befeuchtung des Textils in Abhängigkeit der Beladung erfolgt. Die Beladung kann beispielsweise anhand eines Gewichtssensors oder eines Feuchtigkeitssensors gemessen werden. Die Temperatur des Textils wird erfindungsgemäss gemessen, um zu erkennen, ob dieses noch kühlt und entsprechend noch mit ausreichend Wasser beladen ist.

Es ist eine Steuereinheit vorgesehen, die mit der Befeuchtungsvorrichtung und/oder dem Belüftungsmechanismus in Verbindung steht. Beispielsweise können die Signale eines Beladungssensors zusätzlich zu denen des eines temperatursensors von der Steuereinheit dazu benutzt werden, um im Zusammenspiel mit anderen Parametern (Benutzervorgabe, voreingestellte Parameter, gemessene Raumtemperatur, etc.) die Befeuchtungsvorrichtung anzusteuern und/oder die Belüftung des Textils zu regulieren. Die Steuereinheit kann ausgebildet sein, um beispielsweise mit Hilfe einer Smartphone-App oder anhand von anderen digitalen Medien auch von außerhalb des Raums bedient zu werden, um den Raum vorkühlen zu können. Eine Integration in Smart-Home-Systeme kann in einer Ausführungsform ebenfalls realisiert sein.

Auch Wetterdaten können zur Steuerung der Befeuchtung, Belüftung etc. verwendet werden.

In einer Ausführungsform sind im Textil im Bereich des Vliesstoffes und/oder im Bereich eines Gewebeüberzugs metallische Garne eingearbetet. Diese können sowohl die Wärmeleitung in das Textil begünstigen als auch der elektrischen Signalübertragung von oder zu einem Beladungssensor dienen.

Um ein Verkeimen des Textils zu verhindern kann einerseits vorgesehen sein, dass in dem Textil antimikrobiell wirkende Komponenten wie beispielsweise Silberfäden oder Silberpartikel eingearbeitet sind. Ferner kann die Flüssigkeit, mit welcher das Textil beladen wird, mit einem antimikrobiell wirkenden Zusatz wie beispielsweise Wasserstoffperoxid versetzt sein.

In einer Ausführungsform ist vorgesehen, dass das Textil in regelmäßigen oder unregelmäßigen Abständen gewechselt wird. Es kann beispielsweise aus hygienischen Gründen oder auch aus optischen Gründen wünschenswert sein, das Textil in regelmäßigen Abständen zu wechseln. Das Textil kann dabei getauscht oder gewaschen und wiederverwendet werden. Beispielsweise kann das Textil in einen Rahmen aufgenommen sein, der seinerseits lösbar mit einer Halterung in Verbindung steht. Der Rahmen kann ausgebildet sein, um ein werkzeugfreies Wechseln des Textils zu ermöglichen.

In einer Ausführungsform ist vorgesehen, dass das Textil in ein größeres, flächenförmiges Gesamttextil eingearbeitet ist, das neben wenigstens einem erfindungsgemäß ausgebildeten Textil ein weiteres, konventionelles Textil ohne Vliesstoff oder superabsorbierendes Polymer aufweist, und dass das Gesamttextil in der beschriebenen Weise im oder in thermischer Verbindung mit dem Raum angeordnet wird. Durch das Vorhandensein des Vliesstoffes und des superabsorbierenden Polymers geht die Transluzenz eines Textils zwar nicht ganz verloren, eine gewisse Lichtabsorption ist aber inhärent. Wenn eine höhere Lichtdurchlässigkeit erwünscht ist, kann das erfindungsgemäß ausgebildete Textil also mit konventionellen Textilien in einem Gesamttextil kombiniert werden, beispielsweise streifenförmig abgewechselt werden. Bei dem konventionellen Textil ohne Vliesstoff kann es sich um ein einschichtiges Gestrick oder Gewebe handeln, beispielsweise Segeltuchstoff, Vorhangstoff oder dergleichen.

In einer Ausführungsform ist vorgesehen, dass das Textil als Jalousie, Vorhang oder Windsegel an oder nahe einer Öffnung des Raumes angeordnet ist. Geeignete Öffnungen umfassen Fenster, Türen oder andere Durchbrüche in der Wand. Es kann sich dabei innerhalb oder auch knapp außerhalb des Raumes befinden. Hier kann eine Verdunstung zusätzlich durch Sonneneinstrahlung und Zugluft begünstigt werden. Das Textil erfüllt zudem eine Funktion als Sonnenschutz. Die Befeuchtungsvorrichtung kann an der Aufhängung angeordnet sein, auf der Fläche des Textils angebracht werden oder in der Nähe des Textils aufgestellt werden. Ein Belüftungselement kann beispielsweise in der Nähe des Textils aufgestellt werden oder auch im Bereich der Aufhängung montiert sein. Eine Sensorik, beispielsweise ein Gewichtssensor, kann im Bereich der Aufhängung angeordnet sein und messen.

In einer Ausführungsform ist vorgesehen, dass das Textil als Raumteiler im Raum angeordnet ist. Beispielsweise kann das Textil dabei in einem Rahmen eingefasst sein, der entweder einen oder mehrere Füße aufweisen und frei im Raum stehen kann oder an einer Wand oder einem anderen Fixierungspunkt festgemacht sein kann. Die Befeuchtungsvorrichtung kann am Rahmen angeordnet sein, auf der Fläche des Textils angebracht werden oder in der Nähe des Textils aufgestellt werden. Ein Belüftungselement kann beispielsweise in der Nähe des Textils aufgestellt werden oder auch am Rahmen montiert sein. Eine Sensorik, beispielsweise ein Gewichtssensor, kann im oberen Bereich des Rahmens angeordnet sein und messen.

In einer Ausführungsform ist vorgesehen, dass das Textil an einer Wand des Raumes angeordnet ist. Das Textil kann also Seitenwände oder Decken des Raumes zumidnest teilweise kaschieren und den Räumen so eine spezielle Optik verleihen. Auch eine bildartige Ausgestaltung des Textils ist denkbar. Das Textil kann dabei direkt an der Wand befestigt sein oder in einen Rahmen eingefasst sein, der seinerseits an der Wand befestigt ist. Nahe der Decke ist die Raumtemperatur typischerweise am höchsten, sodass unter diesem Gesichtspunkt eine Anordnung an der Decke bevorzugt sein kann. Die Befeuchtungsvorrichtung kann am Rahmen oder an der Wand angeordnet sein oder auf der Fläche des Textils angebracht werden. Ein Belüftungselement kann am Rahmen oder an der Wand montiert sein. Eine Sensorik, beispielsweise ein Gewichtssensor, kann im Bereich der Aufhängung oder im oberen Bereich des Rahmens angeordnet sein und messen.

In einer Ausführungsform ist vorgesehen, dass das Textil in einem anderem Raum des Gebäudes angeordnet und gekühlte Luft in den einen Raum geleitet wird. Beispielsweise kann das Textil in einem südseitig ausgerichteten Raum mit großer Sonneneinstrahlung und folglich Verdunstung angeordnet werden, die gekühlte Luft aber zumindest teilweise in einen nordseitig angeordneten Raum geleitet werden.

In allen diesen Ausführungsvarianten kann das Textil optisch nach den Wünschen des Benutzers gestaltet werden und durch Tausch mit einem anderen gattungsgemäßen Textil können optische Veränderungen im Raum realisiert werden.

Weitere Einzelheiten und Vorteile der Erfindung ergeben sich aus den nachfolgend anhand der Figuren dargestellten Ausführungsbeispielen. In den Figuren zeigen:
- Figur 1:: eine schematische Darstellung eines Textils, das im Bereich eines Fensters als Vorhang angeordnet ist;
- Figur 2:: eine Variante des in der Figur 1 gezeigten Vorhangs mit einem Wasserreservoir;
- Figur 3:: eine andere Variante des in der Figur 1 gezeigten Vorhangs mit einem Anschluss zur Wasserversorgung; und
- Figur 4:: eine elektronenmikroskopische Aufnahme eines erfindungsgemäß eingesetzten Vliesstoffes.

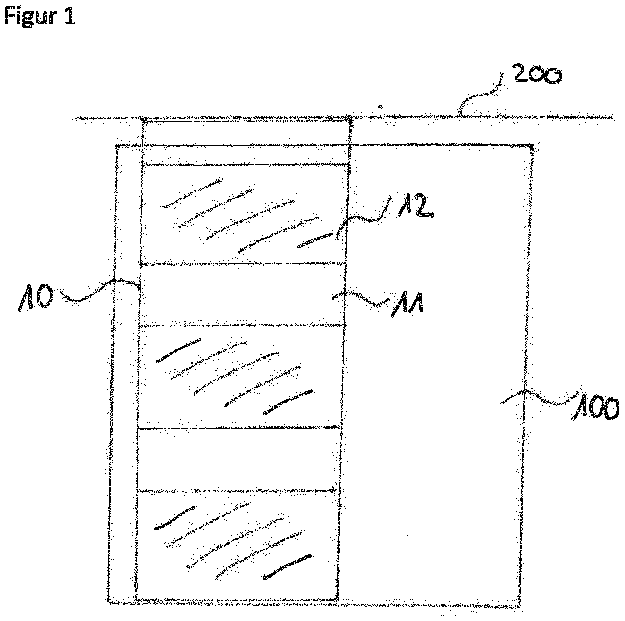

In Figur 1 ist schematisch ein Fenster 100 eines Raums innerhalb eines Wohn- oder Bürogebäudes zu erkennen, das sich bis knapp unter eine Decke des Raums erstreckt. An der Decke ist eine Schiene 200 angeordnet, an der ein Vorhang 10 so befestigt ist, dass er vor das Fenster 100 geschoben werden kann, aus dem Fenster 100 geschoben werden kann, oder oder am Fenster 10 entlang verschoben werden kann. Der Vorhang 10 reicht von der Schiene 200 an der Decke des Raumes bis knapp oberhalb der Unterkante des Fensters 100, das bis zum Boden des Raums liegt.

Der Vorhang 10 umfasst in abwechselnder Anordnung zwei unterschiedliche Zonen 11 und 12, wobei die Zone 11 aus einem gewöhnlichen Vorhangstoff gebildet wird und die Zone 12 aus einem erfindungsgemäß ausgebildeten Textil gebildet wird.

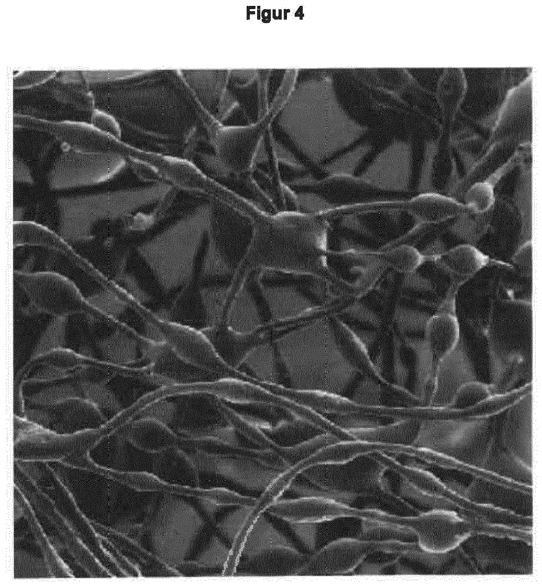

Bei dem Textil der Zone 12 handelt es sich um einen Vliesstoff aus Polyesterfasern, die über das gesamte Volumen des Fliesstoffes gleichmäßig mit einer dünnen Schicht aus einem superabsorbierenden, acrylamidhaltigen Polymer beschichtet sind. In Figur 4 ist eine elektronenmikroskopische Aufnahme des eingesetzten Vliesstoffes dargestellt, wobei die durchgehende Beschichtung der Polyesterfasern mit dem superabsorbierenden Polymer erkennbar ist, die stellenweise tropfenförmige Verdickungen an den Fäden ausbildet.

Der Vliesstoff ist beidseitig mit einem Kunstfasergewebe kaschiert und mit Silberionen imprägniert, um ein Verkeimen zu verhindern.

Das Design des Vorhangs 10 kann individuell gestaltet werden, beispielsweise durch eine individuelle Auswahl der Anzahl der Zonen 11 und 12, ggf. der Verzicht auf die Zonen 11, durch unterschiedliche Designs der Zonen etc.

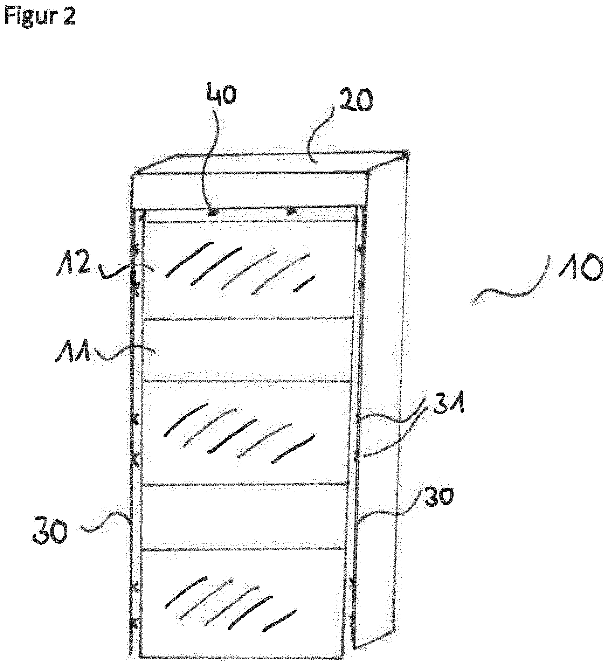

Figur 2 zeigt eine Variante des in der Figur 1 gezeigten Systems, wobei im Bereich der Aufhängung des Vorhangs 10 an der Raumdecke ein Wasserreservoir 20 angeordnet ist. Ausgehend von diesem Wasserreservoir führen Wasserschläuche 30 an den Seiten des Vorhangs 10 entlang nach unten bis zum unteren Ende des Vorhangs 10. In regelmäßigen Abständen sind an den Wasserschläuchen 30 jeweils Düsen 31 angeordnet, um Wasser auf das Textil 12 zu sprühen. Die Düsen 31 werden anhand einer Steuerelektronik aktiv gesteuert, wobei der für die Zerstäubung notwendige Wasserdruck rein durch den hydrostatischen Druck erreicht wird. Das im Wasserreservoir 20 befindliche Wasser ist mit Wasserstoffperoxid versetzt, um eine Verkeimung des Systems zu verhindern.

Ein im Bereich der Aufhängung des Vorhangs 10 angeordneter Gewichtssensor 40 erkennt die Beladung des Vorhangs 10 bzw. genauer gesagt des Textils 12 mit Wasser und leitet diese Information an eine nicht näher dargestellte Steuereinheit weiter, die ihrerseits mit den Düsen 31 in Verbindung steht. Die Ansteuerung der Düsen 31 erfolgt auf der Grundlage von Informationen zur momentanen Raumtemperatur, zur Sollraumtemperatur, zur Belandung des Vorhangs 10 mit Wasser und gegebenenfalls noch weiteren Informationen. So kann eine bedarfsgerechte Regelung der Beladung des Textils 12 erreicht werden, was mit einer Regelung der vom Textil verrichteten Kühlleistung einhergeht.

Die Anordnung aus Wasserreservoir 20, Schläuchen 30 und Sensoren 40 wird gemeinsam mit dem Vorhang 10 an der Schiene 200 verschoben.

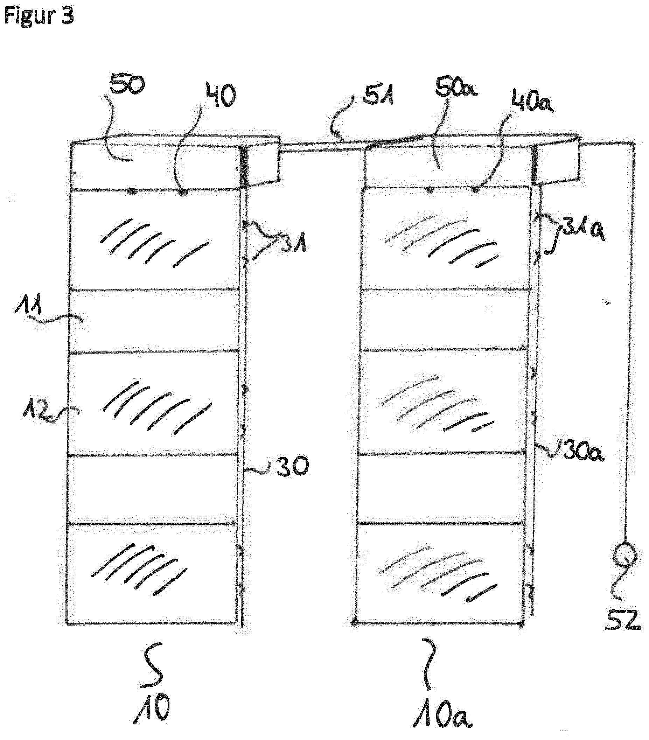

Figur 3 zeigt eine alternative Variante des in der Figur 1 gezeigten Systems, wobei das Wasserreservoir durch einen Verteilerkörper 50 ersetzt ist, der ebenfalls im Bereich der Aufhängung des Vorhangs 10 an der Raumdecke ein Wasserreservoir 20 angeordnet ist. Der Verteilerkörper 50 ist über ein Schlauchsystem 51 an eine Wasserquelle 52 des Gebäudes angeschlossen.

Ausgehend von dem Verteilerkörper 50 führen, wie auch in der Ausführungsform der Figur 2, Wasserschläuche 30 mit Düsen 31 an den Seiten des Vorhangs 10 entlang nach unten bis zum unteren Ende des Vorhangs 10. Der für die Wasserzerstäubung an den Düsen 31 notwendige Wasserdruck wird rein durch den Wasserdruck der Wasserquelle 52 erreicht.

Die Steuerung der Düsen 31 erfolgt wie im Zusammenhang mit dem Ausführungsbeispiel der Figur 2 erläutert und wie auch im Ausführungsbeispiel der Figur 2 wird die Anordnung aus Verteilerkörper 50, Schläuchen 30 und Sensoren 40 gemeinsam mit dem Vorhang 10 an der Schiene 200 verschoben.

Neben dem Vorhang 10 ist in der Figur 3 noch ein weiterer Vorhang 10a mit korrespondierenden Verteilerkörpern 50a, Schläuchen 30a und Sensoren 40a vorgesehen, der entlang derselben Schiene 200 vor dem Fenster 100 verschoben werden kann und funktionsidentisch ist.

## Patentansprüche

1. Verfahren zur Klimatisierung eines Raumes in einem Gebäude, wobei ein flächenförmiges Textil, das einen Vliesstoff umfasst, der mit einem superabsorbierenden Polymer beladen ist, in dem Raum angeordnet und in regelmäßigen oder unregelmäßigen Abständen befeuchtet wird,
**dadurch gekennzeichnet,**
**dass** die Raumtemperatur gemessen wird und die Befeuchtung des Textils in Abhängigkeit der Raumtemperatur im Zusammenspiel mit anderen Parametern erfolgt.

2. Verfahren nach Anspruch 1, **dadurch gekennzeichnet, dass** die Vliesfasern des Vliesstoffes direkt mit einem superabsorbierenden Polymer beschichtet sind.

3. Verfahren nach einem der vorhergehenden Ansprüche, **dadurch gekennzeichnet, dass** die Befeuchtung anhand von Flüssigkeitsbeaufschlagung mittels Sprühdüsen oder anhand von Flüssigkeitsaustritt aus Austrittsöffnungen einer Leitung erfolgt.

4. Verfahren nach einem der vorhergehenden Ansprüche, **dadurch gekennzeichnet, dass** das Verfahren ferner eine aktive Belüftung des mit Flüssigkeit beladenen Textils umfasst.

5. Verfahren nach einem der vorhergehenden Ansprüche, **dadurch gekennzeichnet, dass** auch die Beladung des Textils mit Wasser gemessen wird und die Befeuchtung des Textils ferner in Abhängigkeit der Beladung erfolgt.

6. Verfahren nach einem der vorhergehenden Ansprüche, **dadurch gekennzeichnet, dass** in dem Textil antimikrobiell wirkende Komponenten wie beispielsweise Silberfäden oder Silberpartikel eingearbeitet sind und/oder dass die Flüssigkeit, mit welcher das Textil beladen wird, mit einem antimikrobiell wirkenden Zusatz wie beispielsweise Wasserstoffperoxid versetzt sein.

7. Verfahren nach einem der vorhergehenden Ansprüche, **dadurch gekennzeichnet, dass** das Textil als Jalousie, Vorhang oder Windsegel an oder nahe einer Öffnung, vorzugsweise einem Fenster des Raumes angeordnet ist.

8. Verfahren nach einem der Ansprüche 1-6, **dadurch gekennzeichnet, dass** das Textil als Raumteiler im Raum angeordnet ist.

9. Verfahren nach einem der Ansprüche 1-6, **dadurch gekennzeichnet, dass** das Textil an einer Wand des Raumes angeordnet ist.

## Claims

1. A method for air-conditioning a room in a building, wherein a planar textile which comprises a nonwoven which is loaded with a superabsorbent polymer is arranged in the room and is moistened at regular or irregular intervals,
**characterised in that**
the temperature of the room is measured and the textile is moistened depending on the temperature of the room in conjunction with other parameters.

2. The method according to claim 1, **characterised in that** the nonwoven fibres of the nonwoven are directly coated with a superabsorbent polymer.

3. The method according to one of the preceding claims, **characterised in that** the textile is moistened on the basis of an application of liquid by means of spray nozzles or on the basis of a dispensing of liquid from discharge openings of a line.

4. The method according to one of the preceding claims, **characterised in that** the method also comprises an active aeration of the textile loaded with liquid.

5. The method according to one of the preceding claims, **characterised in that** the loading of the textile with water is also measured and the textile is moistened furthermore depending on the loading.

6. The method according to one of the preceding claims, **characterised in that** components having antimicrobial action, such as silver threads or silver particles, are incorporated in the textile, and/or **in that** the liquid with which the textile is loaded is combined with an additive having antimicrobial action, such as hydrogen peroxide.

7. The method according to one of the preceding claims, **characterised in that** the textile is arranged as a blind, curtain or windbreak on or close to an opening, preferably a window of the room.

8. The method according to one of claims 1-6, **characterised in that** the textile is arranged as a room divider in the room.

9. The method according to one of claims 1-6, **characterised in that** the textile is arranged on a wall of the room.

## Revendications

1. Procédé de climatisation d'une pièce dans un bâtiment, dans lequel un textile de forme plate, qui comprend un non-tissé, qui est chargé avec un polymère superabsorbant, est agencé dans la pièce et humidifié à intervalles réguliers ou irréguliers,
**caractérisé en ce que**
la température de la pièce est mesurée et l'humidification du textile est effectuée en fonction de la température de la pièce en interaction avec d'autres paramètres.

2. Procédé selon la revendication 1, **caractérisé en ce que** les fibres non tissées du non-tissé sont directement enduites avec un polymère superabsorbant.

3. Procédé selon l'une quelconque des revendications précédentes, **caractérisé en ce que** l'humidification est effectuée à l'aide d'une alimentation en liquide au moyen de buses de pulvérisation ou à l'aide d'une sortie de liquide par des orifices de sortie d'une conduite.

4. Procédé selon l'une quelconque des revendications précédentes, **caractérisé en ce que** le procédé comprend en outre une aération active du textile chargé de liquide.

5. Procédé selon l'une quelconque des revendications précédentes, **caractérisé en ce que** la charge en eau du textile est également mesurée et l'humidification du textile est en outre effectuée en fonction de la charge.

6. Procédé selon l'une quelconque des revendications précédentes, **caractérisé en ce que** des composants à action antimicrobienne, tels que par exemple des fils d'argent ou des particules d'argent, sont incorporés dans le textile et/ou **en ce que** le liquide avec lequel le textile est chargé est mélangé avec un additif à action antimicrobienne, tel que par exemple du peroxyde d'hydrogène.

7. Procédé selon l'une quelconque des revendications précédentes, **caractérisé en ce que** le textile est agencé sous la forme d'un store, d'un rideau ou d'une voile à vent au niveau ou à proximité d'une ouverture, de préférence d'une fenêtre, de la pièce.

8. Procédé selon l'une quelconque des revendications 1 à 6, **caractérisé en ce que** le textile est agencé dans la pièce sous forme de séparateur de pièce.

9. Procédé selon l'une quelconque des revendications 1 à 6, **caractérisé en ce que** le textile est agencé sur un mur de la pièce.
